# EUROPÄISCHE PATENTSCHRIFT

(11) **EP 4 071 384 B1**
(45) Veröffentlichungstag und Bekanntmachung des Hinweises auf die Patenterteilung: **20.08.2025**
(21) Anmeldenummer: 22151943.2
(22) Anmeldetag: 18.01.2022
(51) Int. Cl.: F16H 57/023, H02K 7/108, F16H 57/021, H02K 7/116, B60K 6/48, H02K 15/00, H02K 15/14, F16H 57/02, B60K 6/40, B60K 6/405, H02K 7/08, F16H 57/00

(54) **HYBRID-GETRIEBEVORRICHTUNG**
HYBRID TRANSMISSION DEVICE
DISPOSITIF DE TRANSMISSION HYBRIDE

(30) Priorität: 08.04.2021 DE 102021203495
(43) Veröffentlichungstag der Anmeldung: 12.10.2022
(73) Patentinhaber: Magna PT B.V. & Co. KG, 74199 Untergruppenbach (DE)
(72) Erfinder: VIEBACH, Richard, 74177 Bad Friedrichshall (DE); PRUY, Matthias, 71229 Leonberg (DE)
(74) Vertreter: Zangger, Bernd

(56) Entgegenhaltungen:
- EP-A1- 3 772 802
- DE-A1- 102008 002 441
- DE-A1- 102008 002 443
- DE-A1- 102016 112 426
- DE-B4- 112005 002 200
- US-A1- 2020 244 138

## Beschreibung

### Gebiet der Erfindung

Die vorliegende Erfindung betrifft ein Verfahren zur Montage einer Hybrid-Getriebevorrichtung, umfassend eine Elektromaschine und ein Getriebe.

### Stand der Technik

Hybridelektrofahrzeuge, auch kurz Hybridfahrzeuge genannt, sind heutzutage hinlänglich bekannt und verwenden zumindest eine Elektromaschine sowie einen zusätzlichen Antrieb, üblicherweise eine Verbrennungskraftmaschine, zum Antreiben des Fahrzeugs. Bei einem parallelen Hybridantrieb können der Elektromotor und der Verbrennungsmotor zugleich deren Antriebsmomente auf den Antriebsstrang aufbringen. Für die Anordnung der Elektromaschine, des Verbrennungsmotors und des Getriebes eines Parallel-Hybridfahrzeugs sind unterschiedliche Architekturen bekannt. Bei einer sogenannten P2.5 Anordnung sitzt die Elektromaschine üblicherweise in einem Doppelkupplungsgetriebe an einer Eingangswelle eines Teilgetriebes.

Bisher wird eine Elektromaschine, welche in ein Getriebe nach Art einer P2.5-Anwendung derart eingebaut wird, dass die Elektromaschine mit einem Teilgetriebe verbunden ist, als eigenständige, vormontierte Baugruppe verwendet, wobei die Baugruppe der Elektromaschine zusätzlich zu einem Rotor und einem Stator, zwei Lagerschilde zum Lagern der Rotorwelle umfasst.

Wenn das freie Ende der Rotorwelle ein Ritzel aufweist, ist die Lagerung der Rotorwelle im Lagerschild üblicherweise so gestaltet, dass das Ritzel in axialer Richtung "hinter" bzw. "außerhalb" des Lagers auf dieser Seite der Rotorwelle angeordnet ist (sog. "fliegende Lagerung").

Die gesamte, vormontierte Elektromaschinen-Baugruppe kann dann beispielsweise über Anschraubösen an einem Lagerschild in ein Getriebegehäuse verschraubt werden.

Bei dieser Bauweise muss die Baugruppe der Elektromaschine zur Aufnahme der Rotorwellenlager zwei Lagerschilde aufweisen, die mit dem Stator verbunden sind. Dadurch ergibt sich ein zusätzlicher Bauraumbedarf in radiale und axiale Richtung der Elektromaschinen-Baugruppe. Zudem wird die so vorliegende, eigenständige Baugruppe durch das Gewicht der Lagerschilde schwerer. Durch die fliegende Lagerung des Rotors der Elektromaschine muss das Lager am freien Ende der Rotorwelle größer dimensioniert werden, als dies der Fall wäre, wenn das Lager "hinter" dem Ritzel angeordnet wäre. Durch die fliegende Lagerung kommt es im Lastbetrieb auch zu einer größeren Verkippung des Ritzels, als dies der Fall wäre, wenn dieses Lager "hinter dem Ritzel" angeordnet wäre. Durch dieses Verkippen kommt es zu unerwünschten, akustischen Auffälligkeiten (NVH- noise, vibration harshness). Die Lagerschilde ebenso wie das größere Lager verursachen auch hohe Kosten.

Die DE 10 2008 002441 A1 offenbart eine Hybrid-Getriebevorrichtung, umfassend eine Elektromaschine, wobei die Elektromaschine einen außen liegenden Stator und eine innenliegende Rotorwelle umfasst, wobei die Hybrid-Getriebevorrichtung ferner ein Getriebe in einem Getriebegehäuse und eine Kupplung in einem Kupplungsgehäuse umfasst, wobei der Stator im Getriebegehäuse und im Kupplungsgehäuse befestigt ist, wobei die Rotorwelle an einem ersten Ende ein Ritzel aufweist, das mit einem Zwischenrad des Getriebes in Eingriff ist, wobei die Rotorwelle im Bereich des ersten Endes und im Bereich des gegenüberliegenden zweiten Endes der Rotorwelle über ein erstes und zweites Lager gelagert ist, wobei eine Zwischenplatte der Hybrid-Getriebevorrichtung axial im Bereich des ersten Endes der Rotorwelle angeordnet ist, wobei der Stator an der Zwischenplatte befestigt ist, wobei das erste Lager zur Lagerung des ersten Endes der Rotorwelle an der Zwischenplatte festgelegt ist.

### Zusammenfassung der Erfindung

Es ist eine Aufgabe der Erfindung, ein effizientes und kostengünstiges Verfahren zur Montage einer Hybrid-Getriebevorrichtung anzugeben, dass für eine Massenproduktion geeignet ist, wobei die Hybrid-Getriebevorrichtung einen geringeren Bauraumbedarf, Gewicht und Kosten aufweist.

Die Lösung der Aufgabe erfolgt durch ein Verfahren zur Montage einer Hybrid-Getriebevorrichtung mit den Merkmalen gemäß Anspruch 1.

Die Hybrid-Getriebevorrichtung umfasst eine Elektromaschine, wobei die Elektromaschine einen außen liegenden Stator und eine innenliegende Rotorwelle umfasst, wobei die Hybrid-Getriebevorrichtung ferner ein Getriebe in einem Getriebegehäuse und eine Kupplung in einem Kupplungsgehäuse umfasst, wobei der Stator im Getriebegehäuse oder im Kupplungsgehäuse befestigt ist, wobei die Rotorwelle an einem ersten Ende ein Ritzel aufweist, das mit einem Zwischenrad des Getriebes in Eingriff ist, wobei die Rotorwelle im Bereich des ersten Endes und im Bereich des gegenüberliegenden zweiten Endes der Rotorwelle gelagert ist, wobei eine Zwischenplatte axial im Bereich des ersten Endes der Rotorwelle angeordnet ist, wobei der Stator an der Zwischenplatte befestigt ist, wobei das zweite Lager zur Lagerung des zweiten Endes der Rotorwelle unmittelbar im Kupplungsgehäuse festgelegt ist und das erste Lager zu Lagerung des ersten Endes der Rotorwelle unmittelbar am Getriebegehäuse festgelegt ist oder an der Zwischenplatte festgelegt ist.

Das erfindungsgemäße Verfahren zur Montage der Hybrid-Getriebevorrichtung umfasst die Schritte, dass zunächst eine Rotorbaugruppe vorassembliert wird, die zumindest die Rotorwelle und ein Rotorblechpaket umfasst und eine Statorbaugruppe vorassembliert wird, die zumindest ein Statorblechpaket mit Statorwicklungen umfasst, dass die Rotorbaugruppe und die Statorbaugruppe auf einem Werkstückträger in axialer Richtung aufgesetzt und berührungslos ineinander gefügt werden, so dass die Rotorbaugruppe und die Statorbaugruppe einander nicht berühren, wobei der Rotor bevorzugt drehfest am Werkstückträger aufgenommen ist, dass die Zwischenplatte, die den Wellenstummel für die Lagerung des Zwischenrads umfasst, auf dem Stator montiert wird, dass die auf dem Werkstückträger gefügte Rotorbaugruppe und Statorbaugruppe mit dem Getriebe zusammengebaut wird, dass das Getriebegehäuse über das Getriebe gestülpt wird und dass das Kupplungsgehäuse mit dem Getriebegehäuse verbunden wird.

Erfindungsgemäß wird eine Elektromaschine-Baugruppe, die in ein Getriebe eingesetzt werden kann, ohne Lagerschilde hergestellt. Die Lagerung der Rotorwelle erfolgt an zwei Lagern, wobei eines der Lager, nämlich das zweite Lager, welches sich an dem Ende der Rotorwelle befindet, dass nicht das Ritzel trägt, direkt in einem Gehäusebauteil, nämlich im Kupplungsgehäuse, der Hybrid-Getriebevorrichtung festgelegt ist, also drehfest befestigt ist. Das andere Lager, das erste Lager, ist entweder ebenfalls direkt im Gehäuse befestigt, nämlich im Getriebegehäuse, oder ist in einer Zwischenplatte befestigt, die selbst wiederum zur Befestigung des Stators dient und bevorzugt auch im Getriebegehäuse verschraubt ist. Die Zwischenplatte ist bevorzugt eine im wesentlichen kreisförmige Platte, die normal auf die Rotorwelle steht und innen eine bevorzugt ebenfalls kreisförmige Ausnehmung aufweist, durch welche die Rotorwelle verläuft. An dieser Zwischenplatte ist bevorzugt auch ein Wellenstummel ausgebildet, einstückig oder drehfest befestigt, an welchem ein Zwischenrad gelagert ist, das mit dem Ritzel der Rotorwelle kämmt.

Die Lagerung der Rotorwelle erfolgt somit, zumindest an einem Ende oder an beiden Enden der Rotorwelle, direkt im Gehäuse der Hybrid-Getriebevorrichtung. Zumindest ein Lagerschild kann somit entfallen. Eine Zwischenplatte kann mit verschiedenen Zusatzbauteilen bestückt sein, und weist zumindest den Wellenstummel zur Lagerung des Zwischenrads auf und kann somit mehrfach genutzt werden, beispielsweise auch zur Lagerung der Rotorwelle, eines Rotorpositionssensors und/oder eines Rotor-Erdungsrings.

Die Elektromaschine ist somit in das Getriebe vollintegriert, bevorzugt in einer P2.5 Architektur. Ein großserientaugliches Verfahren zur Montage der Elektromaschine in das Getriebe ist damit ermöglicht, wobei der Rotor der Elektromaschine direkt in den beiden Gehäusehälften gelagert wird, ohne dass sich bei dem Montagevorgang Rotor und Stator in einer schädigenden Weise berühren.

Durch diese Lagerung ohne Lagerschilde können Vorteile erreicht werden hinsichtlich einer Kosteneinsparung durch Entfall bzw. Entfernung von Bauteilen, Verkürzung von Toleranzketten, Bauraumoptimierung, Gewichtsreduktion, Optimierung der Verzahnungsschiefstellung unter Last und dadurch NVH-Optimierung, Downsizing-Potentiale für die Rotorlagerung.

Die Begriffe "Getriebegehäuse" und "Kupplungsgehäuse" können zwei Teile, insbesondere zwei Hälften, eines gemeinsamen Gehäuses bezeichnen.

Das Ritzel am ersten Ende der Rotorwelle liegt bevorzugt axial zwischen dem ersten Lager und dem zweiten Lager, so dass das erste Lager außerhalb des Ritzels der Rotorwelle liegt.

Gemäß einer Ausführungsform ist ein Klemmring axial im Bereich des zweiten Endes der Rotorwelle angeordnet, wobei der Stator zwischen der Zwischenplatte und dem Klemmring geklemmt ist, bevorzugt verspannt über Zuganker.

Gemäß einer weiteren Ausführungsform kann der Stator, insbesondere die Statorbleche, axial im Bereich des zweiten Endes der Rotorwelle Anschraubaugen aufweisen, so dass der Stator zwischen der Zwischenplatte und den Anschraubaugen geklemmt ist, bevorzugt verspannt über Zuganker.

Die Rotorbaugruppe und die Statorbaugruppe werden vorzugsweise bevor sie auf dem Werkstückträger in axialer Richtung aufgesetzt und berührungslos gefügt werden, bereits temporär ineinander gefügt, so dass sich die Rotorwelle drehen kann, und zumindest ein Test zur Aussonderung fehlerhafter Teile, beispielsweise ein Rotationstest, durchgeführt, um fehlerhafte Teile auszusondern.

Nachdem das Getriebegehäuse über das Getriebe gestülpt wurde, wird bevorzugt die Zwischenplatte mit dem Getriebegehäuse verschraubt.

Nachdem die Zwischenplatte, die den Wellenstummel für die Lagerung des Zwischenrads umfasst, auf dem Stator montiert wird und bevor die auf dem Werkstückträger gefügte Rotorbaugruppe und Statorbaugruppe mit dem Getriebe zusammengebaut wird, wird erfindungsgemäß das Zwischenrad und dessen Lagerung auf dem Wellenstummel befestigt.

Erfindungsgemäß wird, nachdem das Zwischenrad auf dem Wellenstummel befestigt wurde, bevor die auf dem Werkstückträger gefügte Rotorbaugruppe und Statorbaugruppe mit dem Getriebe zusammengebaut wird, das erste Lager zur Lagerung des ersten Endes der Rotorwelle an der Rotorwelle befestigt. Alternativ kann das erste Lager bereits in der Zwischenplatte befestigt sein. Nachdem das Getriebegehäuse über das Getriebe gestülpt wird und bevor das Kupplungsgehäuse mit dem Getriebegehäuse verbunden wird, wird der Werkstückträger demontiert.

Bevor das Kupplungsgehäuse mit dem Getriebegehäuse verbunden wird und bevorzugt nachdem das Getriebegehäuse über das Getriebe gestülpt wurde, kann ein Klemmring axial im Bereich des zweiten Endes der Rotorwelle am Stator angebracht werden, wobei der Stator zwischen der Zwischenplatte und dem Klemmring geklemmt wird. Besonders bevorzugt wird der Stator zwischen der Zwischenplatte und dem Klemmring oder zwischen der Zwischenplatte und den Anschraubaugen des Stators über mehrere Zuganker verspannt.

Weitere vorteilhafte Schritte des Montage-Verfahrens sind in der Beschreibung der Figuren angegeben.

Die Erfindung beschreibt somit ein Verfahren zur Montage einer Hybrid-Getriebevorrichtung, welches es ermöglicht, eine Elektromaschine mit einem Lager (dem zweiten Lager) (nachfolgend: Variante 1 genannt) oder beiden Lagern (erstes und zweites Lager) (nachfolgend Variante 2 genannt) direkt in ein Kupplungsgehäuse (Variante 1) oder in ein Kupplungs- und Getriebegehäuse (Variante 2) zu lagern. Dadurch ist es möglich, dass Lagerschilde entfallen können bzw. leichter und platzsparender gestaltet werden können, das erste Lager "hinter" dem Ritzel direkt im Getriebegehäuse angeordnet werden kann (Variante 2), durch eine Anordnung des ersten Lagers hinter dem Ritzel die Verkippung unter Last desselben minimiert wird (Variante 2) was sich positiv auf die Lagergröße des ersten Lagers sowie auf das Geräuschverhalten (NVH) auswirkt, Kosten eingespart werden können (Variante 1 und 2).

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung einer Elektromaschine einer nach dem erfindungsgemäßen Verfahren montierten Hybrid-Getriebevorrichtung vom zweiten Ende der Rotorwelle her.
- Fig. 2: ist eine dreidimensionale Darstellung der Elektromaschine der Hybrid-Getriebevorrichtung gemäß Fig. 1 vom ersten Ende der Rotorwelle her.
- Fig. 3: ist eine seitliche Schnittansicht der Elektromaschine der Hybrid-Getriebevorrichtung gemäß Fig. 1.
- Fig. 4: ist eine ausschnittsweise Schnittansicht einer erfindungsgemäß hergestellten Hybrid-Getriebevorrichtung mit einer Elektromaschine gemäß Fig. 1.
- Fig. 5: ist eine schematische Darstellung von Schritten eines erfindungsgemäßen Verfahrens zur Montage einer Hybrid-Getriebevorrichtung gemäß Fig. 4.

### Detaillierte Beschreibung der Erfindung

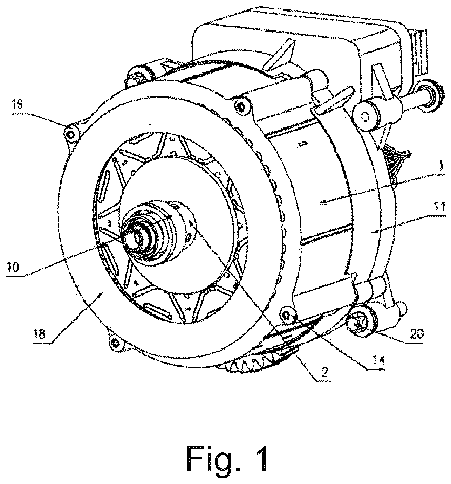

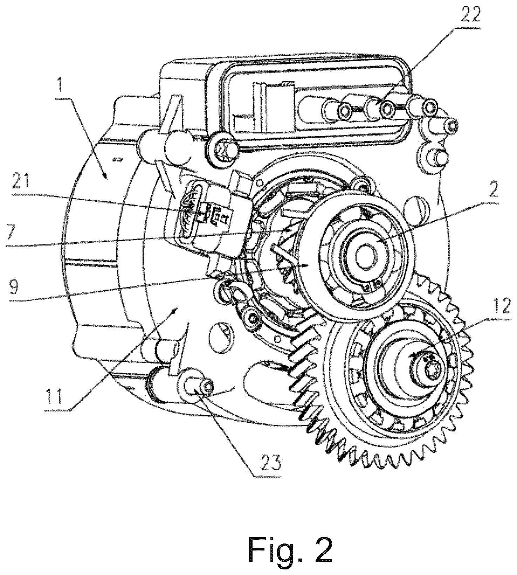

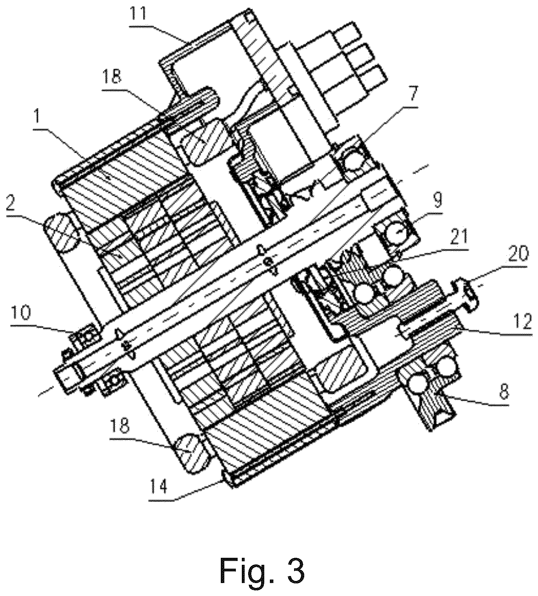

In den Fig. 1-3 ist eine Elektromaschine einer erfindungsgemäß hergestellten Hybrid-Getriebevorrichtung dargestellt - in der Fig. 1 von Seite des zweiten Lagers 10 her, in Fig. 2 von Seite des ersten Lagers 9 her, in Fig. 3 in einem seitlichen Schnitt.

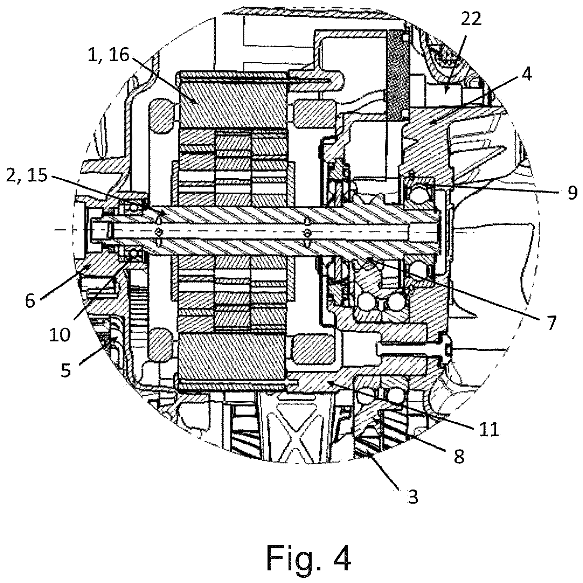

Die Elektromaschine umfasst einen außen liegenden Stator 1 und eine innenliegende, drehbare Rotorwelle 2. Eine Hybrid-Getriebevorrichtung mit einer solchen Elektromaschine (siehe Fig. 4) umfasst ein Getriebe 3 in einem Getriebegehäuse 4 und eine Kupplung 5 in einem Kupplungsgehäuse 6. Der Stator 1 ist dann im Getriebegehäuse 4 befestigt.

Die Elektromaschine und das Getriebe 3 sind in einer P2.5 Architektur angeordnet.

Die Rotorwelle 2 weist an einem ersten Ende ein Ritzel 7 auf (Fig. 2 und 3), das mit einem Zwischenrad 8 des Getriebes 3 in Eingriff ist (Fig. 4 und Fig. 3). Die Rotorwelle 2 ist im Bereich des ersten Endes und im Bereich des gegen-überliegenden zweiten Endes der Rotorwelle 2 über ein erstes und zweites Lager 9, 10 gelagert.

Eine am Stator 1 befestigte Zwischenplatte 11 ist axial im Bereich des ersten Endes der Rotorwelle 2 angeordnet (Fig. 2).

Das zweite Lager 10 zur Lagerung des zweiten Endes der Rotorwelle 2 ist unmittelbar im Kupplungsgehäuse 6 festgelegt und das erste Lager 9 zur Lagerung des ersten Endes der Rotorwelle 2 ist am Getriebegehäuse 4 festgelegt (Fig. 4) oder an der Zwischenplatte 11 festgelegt. Die Zwischenplatte 11 ist im Getriebegehäuse 4 verschraubt.

Das Zwischenrad 8 ist an einem Wellenstummel 12 gelagert, wobei der Wellenstummel 12 an der Zwischenplatte 11 ausgebildet ist (Fig. 2 und 3).

In Fig. 2 und 3 ist dargestellt, dass das Ritzel 7 am ersten Ende der Rotorwelle 2, axial zwischen dem ersten Lager 9 und dem zweiten Lager 10, liegt, so dass das erste Lager 9 außerhalb des Ritzels 7 der Rotorwelle 2 liegt.

An der Zwischenplatte 11 sind auch der stehende Teil eines Resolvers 21 befestigt, sowie AC-Phasenanschlüsse 22 der Elektromaschine. Die Zwischenplatte 11 ist über Befestigungsschrauben 23 am Getriebegehäuse 4 verschraubt.

Fig. 1 zeigt, dass der Stator 1 zwischen der Zwischenplatte 11 und den Anschraubaugen 19 der Statorbleche geklemmt ist, in dem die Zwischenplatte 11 und die Anschraubaugen 19 über mehrere umfänglich verteilte Zuganker 14 - insbesondere Schrauben - verspannt sind. Die Zuganker 14 verlaufen durch die Anschraubaugen 19 eines Klemmrings oder des Stators 1, sowie in jeweils den Anschraubaugen 19 zugeordnete Befestigungspunkte an der Zwischenplatte 11. Die Zwischenplatte 11 weist auch Befestigungsschrauben 23 auf, zur Verschraubung der Zwischenplatte 11 am Getriebegehäuse 4.

In Fig. 1 ist am zweiten Ende der Rotorwelle auch der Wickelkopf 18 des Stators 1 sichtbar.

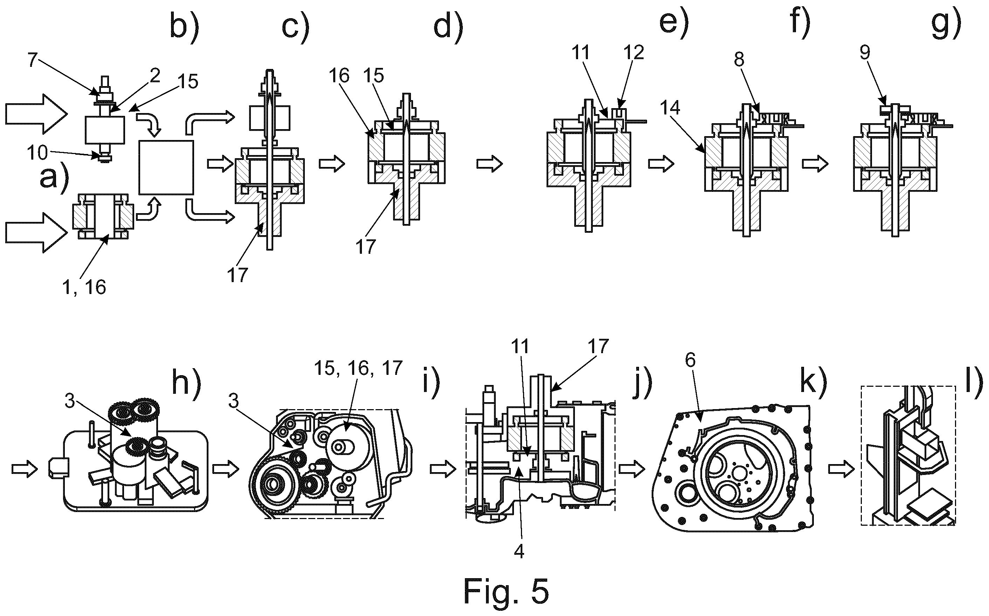

Fig. 5 stellt Schritte eines erfindungsgemäßen Verfahrens zur Montage einer Hybrid-Getriebevorrichtung gemäß Fig. 1-4 schematisch dar.

Die einzelnen Schritte des Verfahrens laufen vorzugsweise in der dargestellten zeitlichen Reihenfolge ab.

Erster Schritt, a): Der Ausgangszustand der Elektromaschine ist wie folgt:
Eine vorassemblierte Rotorbaugruppe 15, umfassend:
- der Rotorwelle 2, wobei das Ritzel 7 auf diese aufgeschnitten sein kann,
- dem Rotorblechpaket, welches in üblicher Weise mittels einer Presspassung auf der Welle befestigt sein kann,
- im Fall einer permanenterregten Synchronmaschine den Permanentmagneten, welche auf oder in dem Rotorblechpaket befestigt sein kann,
- dem rotierenden Teil des Resolvers ("Target"), welcher auf der Welle befestigt sein kann
- gegebenenfalls dem zweiten Lager 10

Eine vorassemblierte Statorbaugruppe 16, umfassend:
- das Statorblechpaket,
- die Statorwicklungen, welche in das Statorblechpaket eingelassen sind, wobei die üblichen Verfahrensschritte zur Herstellung der Statorwicklung (Ausformen der Wickelköpfe, Verguss mit Tränkharz, vercrimpen der Phasenanschlüsse etc) bereits durchgeführt wurden,
- einem Temperatursensor nebst Niedervolt-Anschluss.

Das vorgeschlagene Verfahren beinhaltet die folgenden Schritte:
Zweiter Schritt, b): Die zuvor genannten, vorassemblierten Baugruppen 15, 16 werden temporär berührungslos ineinander gefügt, wobei der Rotor zum Beispiel über sog. Zentrierdorne an beiden Enden gehalten werden kann, sodass er sich drehen kann.

Die temporär gefügten vorassemblierten Baugruppen 15, 16 können einer Reihe von Tests, die eine Rotation des Rotors beinhalten (sog. dynamischer Motor-Test) unterzogen werden, um Schlechtteile zu identifizieren und aus dem weiteren Montageprozess auszuschließen und/oder um wesentliche Maschinenparameter, die einer Streuung unterliegen, zu ermitteln.

Dritter Schritt, c): Die beiden vorassemblierten Baugruppen 15, 16 werden nach der Überprüfung zunächst wieder getrennt und anschließend auf einem Werkstückträger 17, erneut berührungslos gepaart, wobei der Rotor in diesem Fall nicht rotationsfähig ist. Das "verheiraten" von Rotorbaugruppe 15 und Statorbaugruppe 16 erfolgt dabei wie folgt:
- Die Statorbaugruppe 16 wird auf einen Werkstückträger 17 aufgesetzt, welcher den vertikal stehenden Stator 1 hält und zentriert.
- Der Werkstückträger 17 beinhaltet eine Führung, in welcher ein gegebenenfalls axial beweglicher Zentrierdorn montiert ist.
- Die Rotorbaugruppe 15 wird in axialer Richtung senkrecht auf den Zentrierdorn gesteckt, welcher wiederum in die Innenkontur der Hohlwelle des Rotors eintaucht. Die Rotorwelle 2 ist dabei als Hohlwelle ausgeführt. So können Rotor und Stator in vorteilhafter Weise gefügt werden, ohne dass es dabei zu einem dynamischen Kontakt von Rotor und Stator kommt, welcher eine Beschädigung eines der Bauteile zur Folge haben könnte.

Vierter Schritt, d): Rotorbaugruppe 15 und Statorbaugruppe 16 sind auf dem Werkstückträger 17 berührungslos gefügt.

Fünfter Schritt, e): Es wird eine Zwischenplatte 11 auf den Stator 1 montiert. Diese Zwischenplatte 11 umfasst:
- einen Wellenstummel 12 für die Aufnahme der Zwischenradlagerung
- eine Aufnahme für den Stator des Resolvers 21
Je nach gewählter Variante (1 oder 2) kann die Zwischenplatte 11 zudem einen Lagersitz für das erste Lager 9 beinhalten (Variante 1). In der Fig. 4 ist Variante 2 dargestellt, wobei die Lagerung im Getriebegehäuse 4 erfolgt.

Sechster Schritt, f): Das Zwischenrad 8 nebst seiner Lagerung wird auf dem Wellenstummel 12 befestigt.

Siebenter Schritt, g): Das erste Lager 9 wird (im Fall der Variante 2) "hinter" (bzw. außerhalb) dem Ritzel 7 montiert.

Achter Schritt, h): Die auf dem Werkstückträger 17 vorassemblierte Baugruppe 15, 16 wird auf dem Getriebe-Werkstückträger, auf dem der vorassemblierte Radsatz des Getriebes 3 vorhanden ist, befestigt und die Räderkette von Elektromaschine und Getriebe 3 werden miteinander in Eingriff gebracht.

Neunter Schritt: Das Getriebegehäuse 4 wird manuell über den Radsatz gestülpt, wobei unter anderem das erste Lager 9 der Elektromaschine im Getriebegehäuse 4 aufgenommen wird (in der Variante 2).

Zehnter Schritt, i): Das Kupplungsgehäuse 6 mit dem Radsatz und der Elektromaschinen-Baugruppe 15, 16 wird gedreht, sodass die offene Gehäusehälfte vertikal nach oben zeigt. Der Werkstückträger 17 der Elektromaschinen-Baugruppe 15, 16 ist dabei noch auf am Stator 1 befestigt und wird mitgedreht.

Elfter Schritt, j): Die Zwischenplatte 11 wird in das Getriebegehäuse 4 verschraubt.

Für das weitere Vorgehen sind nun, unabhängig davon ob Variante 1 oder 2 durchgeführt wird, zwei Verfahren denkbar, die nachfolgend mit I oder II bezeichnet werden, wobei das erfindungsgemäße Verfahren im Anspruch 1 definiert wird.

### Verfahren I (dargestellt in Fig. 5):

- Der Werkstückträger 17 mit dem Zentrierdorn wird demontiert. Dadurch, dass das zweite Lager 10 noch nicht im Kupplungsgehäuse 6 montiert ist, wird sich der Rotor infolge der Magnetkräfte an den Stator 1 anlegen. Dies ist jedoch unkritisch, da dies quasistatisch (ohne weitere Relativbewegung nach dem Anlegen) erfolgt.

### Verfahren II:

- Durch eine ohnehin an geeigneter Stelle im Getriebegehäuse 4 bestehende Bohrung wird der Rotor durch einen Zentrierdorn, welcher durch diese Bohrung von unten in den Rotor eingeschoben wird, gehalten. In Fig. 5 Bild j) ist die Position und Richtung der Einführung des zweiten Zentrierdorns mit einem vertikalen Pfeil von unten nach oben gekennzeichnet.

Beiden Verfahren ist folgender optionaler Schritt gemein:
Auf der zweiten Seite der Rotorwelle 2 wird am Außendurchmesser des Stators 1 ein Klemmring angebracht, welcher vier Anschraubaugen 19 beinhaltet. Durch diese Anschraubaugen 19 des Klemmrings, oder Anschraubaugen 19 direkt am Stator 1, wird der Stator 1 zwischen den Anschraubaugen 19 und der Zwischenplatte 11 geklemmt.

Hinsichtlich des weiteren Verfahrens ist wiederum zwischen Verfahren I und Verfahren II zu unterscheiden, wobei das erfindungsgemäße Verfahren im Anspruch 1 definiert wird.

### Verfahren I:

Im Kupplungsgehäuse 6 ist an passender Stelle eine Bohrung vorhanden (siehe die runde Markierung in Schritt k) der Fig. 5). Wenn das Kupplungsgehäuse 6 zum Schließen des Getriebes auf das Getriebegehäuse 4 mit dem Radsatz herabgesenkt wird (die dafür verwendete Station ist in Bild l) in Fig. 5 dargestellt), kann durch diese Bohrung erneut ein Zentrierdorn in die Rotorwelle 2 eintauchen, diese vom Stator 1 lösen und anschließend in einer definierten Position halten, während das Kupplungsgehäuse 6 mit dem Getriebegehäuse 4 verbunden wird.

Der Zentrierdorn wird anschließend herausgezogen und die Öffnung im Kupplungsgehäuse 6 verschlossen.

### Verfahren II:

Da der untere Zentrierdorn den Rotor in einer definierten Position zentriert, wird beim Fügen des Kupplungsgehäuses 6 auf das Getriebegehäuse 4 keine Öffnung im Kupplungsgehäuse 6 mehr benötigt.

In beiden Verfahren und Varianten gilt, dass das Kupplungsgehäuse 6 das zweite Lager 10 aufnimmt (siehe Fig. 4).

### Bezugszeichenliste

- 1: Stator
- 2: Rotorwelle
- 3: Getriebe
- 4: Getriebegehäuse
- 5: Kupplung
- 6: Kupplungsgehäuse
- 7: Ritzel
- 8: Zwischenrad
- 9: erstes Lager
- 10: zweites Lager
- 11: Zwischenplatte
- 12: Wellenstummel
- 14: Zuganker
- 15: Rotorbaugruppe
- 16: Statorbaugruppe
- 17: Werkstückträger
- 18: Wickelkopf
- 19: Anschraubauge
- 20: Befestigungsschraube
- 21: Resolver
- 22: AC-Phasenanschlüsse
- 23: Befestigungsschraube

## Patentansprüche

1. Verfahren zur Montage einer Hybrid-Getriebevorrichtung, umfassend eine Elektromaschine, wobei die Elektromaschine einen außen liegenden Stator (1) und eine innenliegende Rotorwelle (2) umfasst, wobei die Hybrid-Getriebevorrichtung ferner ein Getriebe (3) in einem Getriebegehäuse (4) und eine Kupplung (5) in einem Kupplungsgehäuse (6) umfasst, wobei der Stator (1) im Getriebegehäuse (4) oder im Kupplungsgehäuse (6) befestigt ist, wobei die Rotorwelle (2) an einem ersten Ende ein Ritzel (7) aufweist, das mit einem Zwischenrad (8) des Getriebes (3) in Eingriff ist, wobei die Rotorwelle (2) im Bereich des ersten Endes und im Bereich des gegenüberliegenden zweiten Endes der Rotorwelle (2) über ein erstes und zweites Lager (9, 10) gelagert ist,
wobei eine Zwischenplatte (11) der Hybrid-Getriebevorrichtung axial im Bereich des ersten Endes der Rotorwelle (2) angeordnet ist, wobei der Stator (1) an der Zwischenplatte (11) befestigt ist, wobei das zweite Lager (10) zur Lagerung des zweiten Endes der Rotorwelle (2) unmittelbar im Kupplungsgehäuse (6) festgelegt ist und das erste Lager (9) zur Lagerung des ersten Endes der Rotorwelle (2) am Getriebegehäuse (4) festgelegt ist oder an der Zwischenplatte (11) festgelegt ist, wobei zunächst eine Rotorbaugruppe (15) vorassembliert wird, die zumindest die Rotorwelle (2) die an einem ersten Ende das Ritzel (7) aufweist, und ein Rotorblechpaket und das zweite Lager (10) umfasst und eine Statorbaugruppe (16) vorassembliert wird, die zumindest ein Statorblechpaket mit Statorwicklungen umfasst, dass die Rotorbaugruppe (15) und die Statorbaugruppe (16) auf einem Werkstückträger (17) in axialer Richtung aufgesetzt und berührungslos ineinander gefügt werden, dass die Zwischenplatte (11), die einen Wellenstummel (12) für die Lagerung des Zwischenrads (8) umfasst, auf dem Stator (1) montiert wird, dass die auf dem Werkstückträger (17) gefügte Rotorbaugruppe (15) und Statorbaugruppe (16) mit dem Getriebe (3) zusammengebaut wird, dass das Getriebegehäuse (4) über das Getriebe (3) gestülpt wird, dass das Kupplungsgehäuse (6) mit dem Getriebegehäuse (4) verbunden wird, wobei, nachdem die Zwischenplatte (11), die den Wellenstummel (12) für die Lagerung des Zwischenrads (8) umfasst, auf dem Stator (1) montiert wird und vorzugsweise bevor die auf dem Werkstückträger (17) gefügte Rotorbaugruppe (15) und Statorbaugruppe (16) mit dem Getriebe (3) zusammengebaut wird, das Zwischenrad (8) auf dem Wellenstummel (12) befestigt wird, wobei bevor die auf dem Werkstückträger (17) gefügte Rotorbaugruppe (15) und Statorbaugruppe (16) mit dem Getriebe (3) zusammengebaut wird, bevorzugt nachdem das Zwischenrad (8) auf dem Wellenstummel (12) befestigt wurde, das erste Lager (9) zur Lagerung des ersten Endes der Rotorwelle (2) an der Rotorwelle (2) befestigt wird oder das erste Lager (9) bereits in der Zwischenplatte (11) befestigt ist, wobei, nachdem das Getriebegehäuse (4) über das Getriebe (3) gestülpt wird und bevor das Kupplungsgehäuse (6) mit dem Getriebegehäuse (4) verbunden wird, der Werkstückträger (17) demontiert wird.

2. Verfahren zur Montage einer Hybrid-Getriebevorrichtung nach Anspruch 1,
**dadurch gekennzeichnet , dass** das Ritzel (7) am ersten Ende der Rotorwelle (2) axial zwischen dem ersten Lager (9) und dem zweiten Lager (10) liegt, so dass das erste Lager (9) außerhalb des Ritzels (7) der Rotorwelle (2) liegt.

3. Verfahren zur Montage einer Hybrid-Getriebevorrichtung nach einem der vorhergehenden Ansprüche,
**dadurch gekennzeichnet , dass** ein Klemmring axial im Bereich des zweiten Endes der Rotorwelle (2) angeordnet ist, wobei der Stator (1) zwischen der Zwischenplatte (11) und dem Klemmring geklemmt ist, bevorzugt verspannt über Zuganker (14), oder dass der Stator (1) axial im Bereich des zweiten Endes der Rotorwelle (2) Anschraubaugen (19) aufweist, so dass der Stator (1) zwischen der Zwischenplatte (11) und den Anschraubaugen (19) geklemmt ist, bevorzugt verspannt über Zuganker (14).

4. Verfahren nach einem der vorhergehenden Ansprüche,
**dadurch gekennzeichnet , dass** die Rotorbaugruppe (15) und die Statorbaugruppe (16), bevor sie auf dem Werkstückträger (17) in axialer Richtung aufgesetzt und berührungslos gefügt werden, bereits temporär ineinander gefügt werden, so dass sich die Rotorwelle (2) drehen kann, und zumindest ein Rotationstest durchgeführt wird um fehlerhafte Teile auszusondern.

5. Verfahren nach einem der vorhergehenden Ansprüche,
**dadurch gekennzeichnet , dass**, nachdem das Getriebegehäuse (4) über das Getriebe (3) gestülpt wurde, die Zwischenplatte (11) mit dem Getriebegehäuse (4) verschraubt wird.

6. Verfahren nach Anspruch 3,
**dadurch gekennzeichnet , dass**, bevor das Kupplungsgehäuse (6) mit dem Getriebegehäuse (4) verbunden wird, bevorzugt nachdem das Getriebegehäuse (4) über das Getriebe (3) gestülpt wurde, der Klemmring axial im Bereich des zweiten Endes der Rotorwelle (2) am Stator (1) angebracht wird, wobei der Stator (1) zwischen der Zwischenplatte (11) und dem Klemmring geklemmt wird, bevorzugt verspannt über Zuganker (14).

## Claims

1. Method for assembling a hybrid transmission device, comprising an electric machine, wherein the electric machine comprises an externally situated stator (1) and an internally situated rotor shaft (2), wherein the hybrid transmission device furthermore comprises a transmission (3) in a transmission housing (4) and a clutch (5) in a clutch housing (6), wherein the stator (1) is fastened in the transmission housing (4) or in the clutch housing (6), wherein the rotor shaft (2) has, at a first end, a pinion (7) that meshes with an intermediate gear (8) of the transmission (3), wherein the rotor shaft (2) is mounted in the region of the first end and in the region of the oppositely situated second end of the rotor shaft (2) by means of a first and a second bearing (9, 10),
wherein an intermediate plate (11) of the hybrid transmission device is arranged axially in the region of the first end of the rotor shaft (2), wherein the stator (1) is fastened to the intermediate plate (11), wherein the second bearing (10) for the mounting of the second end of the rotor shaft (2) is fixed directly in the clutch housing (6), and the first bearing (9) for the mounting of the first end of the rotor shaft (2) is fixed to the transmission housing (4) or is fixed to the intermediate plate (11), wherein, firstly, a rotor module (15) that comprises at least the rotor shaft (2), which has the pinion (7) at a first end, and a rotor laminated core and the second bearing (10) is preassembled, and a stator module (16) that comprises at least one stator laminated core with stator windings is preassembled, in that the rotor module (15) and the stator module (16) are placed in an axial direction onto a workpiece carrier (17) and are fitted one inside the other in contact-free fashion, in that the intermediate plate (11), which comprises a shaft stub (12) for the mounting of the intermediate gear (8), is mounted on the stator (1), in that the rotor module (15) and stator module (16) fitted on the workpiece carrier (17) are assembled with the transmission (3), in that the transmission housing (4) is placed over the transmission (3), and in that the clutch housing (6) is connected to the transmission housing (4), wherein, after the intermediate plate (11), which comprises the shaft stub (12) for the mounting of the intermediate gear (8), is mounted on the stator (1), and preferably before the rotor module (15) and stator module (16) fitted on the workpiece carrier (17) are assembled with the transmission (3), the intermediate gear (8) is fastened on the shaft stub (12), wherein, before the rotor module (15) and stator module (16) fitted on the workpiece carrier (17) are assembled with the transmission (3), preferably after the intermediate gear (8) has been fastened on the shaft stub (12), the first bearing (9) for the mounting of the first end of the rotor shaft (2) is fastened to the rotor shaft (2), or the first bearing (9) is already fastened in the intermediate plate (11), wherein, after the transmission housing (4) is placed over the transmission (3), and before the clutch housing (6) is connected to the transmission housing (4), the workpiece carrier (17) is dismounted.

2. Method for assembling a hybrid transmission device according to Claim 1,
**characterized in that** the pinion (7) is situated at the first end of the rotor shaft (2) axially between the first bearing (9) and the second bearing (10), such that the first bearing (9) is situated to the outside of the pinion (7) of the rotor shaft (2).

3. Method for assembling a hybrid transmission device according to either of the preceding claims,
**characterized in that** a clamping ring is arranged axially in the region of the second end of the rotor shaft (2), wherein the stator (1) is clamped between the intermediate plate (11) and the clamping ring, preferably in a manner braced by means of tension bolts (14), or **in that** the stator (1) has screw attachment bosses (19) axially in the region of the second end of the rotor shaft (2), such that the stator (1) is clamped between the intermediate plate (11) and the screw attachment bosses (19), preferably in a manner braced by means of tension bolts (14).

4. Method according to one of the preceding claims,
**characterized in that**, before being placed in an axial direction onto the workpiece carrier (17) and being fitted in contact-free fashion, the rotor module (15) and the stator module (16) are already temporarily fitted one inside the other such that the rotor shaft (2) can rotate, and at least one rotation test is performed in order to single out defective parts.

5. Method according to one of the preceding claims,
**characterized in that**, after the transmission housing (4) has been placed over the transmission (3), the intermediate plate (11) is screwed to the transmission housing (4).

6. Method according to Claim 3,
**characterized in that**, before the clutch housing (6) is connected to the transmission housing (4), preferably after the transmission housing (4) has been placed over the transmission (3), the clamping ring is attached to the stator (1) axially in the region of the second end of the rotor shaft (2), wherein the stator (1) is clamped between the intermediate plate (11) and the clamping ring, preferably in a manner braced by means of tension bolts (14).

## Revendications

1. Procédé d'assemblage d'un dispositif de transmission hybride comprenant une machine électrique, la machine électrique comprenant un stator (1) situé à l'extérieur et un arbre de rotor (2) situé à l'intérieur, le dispositif de transmission hybride comprenant en outre une transmission (3) dans un carter (4) de transmission et un embrayage (5) dans un carter (6) d'embrayage, le stator (1) étant fixé dans le carter (4) de transmission ou dans le carter (6) d'embrayage, l'arbre de rotor (2) comportant à une première extrémité un pignon (7) qui est en prise avec une roue intermédiaire (8) de la transmission (3), l'arbre de rotor (2) étant supporté dans la zone de la première extrémité et dans la zone de la deuxième extrémité opposée de l'arbre de rotor (2) par l'intermédiaire d'un premier et d'un deuxième palier (9, 10),
une plaque intermédiaire (11) du dispositif de transmission hybride étant disposée axialement dans la zone de la première extrémité de l'arbre de rotor (2), le stator (1) étant fixé à la plaque intermédiaire (11), le deuxième palier (10) pour le montage de la deuxième extrémité de l'arbre de rotor (2) étant fixé directement dans le carter (6) d'embrayage et le premier palier (9) pour le montage de la première extrémité de l'arbre de rotor (2) étant fixé sur le carter (4) de transmission ou étant fixé sur la plaque intermédiaire (11), un ensemble rotor (15) étant d'abord préassemblé, lequel comprend au moins l'arbre de rotor (2) qui présente le pignon (7) à une première extrémité, et un feuilletage de tôles de rotor et le deuxième palier (10), et un ensemble stator (16) étant préassemblé, lequel comprend au moins un feuilletage de tôles de stator avec des enroulements de stator, de telle sorte que l'ensemble rotor (15) et l'ensemble stator (16) sont posés sur un porte-pièce (17) dans le sens axial et emboîtés l'un dans l'autre sans contact, que la plaque intermédiaire (11), qui comprend un bout d'arbre (12) pour le montage de la roue intermédiaire (8), est montée sur le stator (1), que l'ensemble rotor (15) et l'ensemble stator (16) emboîtés sur le porte-pièce (17) sont assemblés avec la transmission (3), que le carter (4) de transmission est emmanché sur la transmission (3), que le carter (6) d'embrayage est relié au carter (4) de transmission, après que la plaque intermédiaire (11) qui comprend le bout d'arbre (12) pour le logement de la roue intermédiaire (8) a été montée sur le stator (1) et de préférence avant que l'ensemble rotor (15) et l'ensemble stator (16) emboîtés sur le porte-pièce (17) soient assemblés avec la transmission (3), la roue intermédiaire (8) est fixée sur le bout d'arbre (12), avant que l'ensemble rotor (15) et l'ensemble stator (16) emboîtés sur le porte-pièce (17) soient assemblés avec la transmission (3), de préférence après que la roue intermédiaire (8) a été fixée sur le bout d'arbre (12), le premier palier (9) destiné à supporter la première extrémité de l'arbre de rotor (2) est fixé sur l'arbre de rotor (2) ou le premier palier (9) est déjà fixé dans la plaque intermédiaire (11), après que le carter (4) de transmission a été emmanché sur la transmission (3) et avant que le carter (6) d'embrayage ne soit relié au carter (4) de transmission, le porte-pièce (17) est démonté.

2. Procédé d'assemblage d'un dispositif de transmission hybride selon la revendication 1,
**caractérisé en ce que** le pignon (7) à la première extrémité de l'arbre de rotor (2) est situé axialement entre le premier palier (9) et le deuxième palier (10), de sorte que le premier palier (9) est situé à l'extérieur du pignon (7) de l'arbre de rotor (2).

3. Procédé d'assemblage d'un dispositif de transmission hybride selon l'une des revendications précédentes,
**caractérisé en ce qu'**une bague de serrage est disposée axialement dans la zone de la deuxième extrémité de l'arbre de rotor (2), le stator (1) étant serré entre la plaque intermédiaire (11) et la bague de serrage, de préférence serré par des tirants (14), ou **en ce que** le stator (1) présente axialement dans la zone de la deuxième extrémité de l'arbre de rotor (2) des œillets de vissage (19), de sorte que le stator (1) est serré entre la plaque intermédiaire (11) et les œillets de vissage (19), de préférence serré par des tirants (14).

4. Procédé selon l'une des revendications précédentes, **caractérisé en ce que** l'ensemble rotor (15) et l'ensemble stator (16), avant d'être posés sur le porte-pièce (17) dans le sens axial et emboîtés sans contact, sont déjà emboîtés temporairement l'un dans l'autre de manière à ce que l'arbre de rotor (2) puisse tourner, et qu'au moins un test de rotation soit effectué afin d'éliminer les pièces défectueuses.

5. Procédé selon l'une des revendications précédentes, **caractérisé en ce que**, après que le carter (4) de transmission a été emmanché sur la transmission (3), la plaque intermédiaire (11) est vissée avec le carter (4) de transmission.

6. Procédé selon la revendication 3,
**caractérisé en ce que**, avant que le carter (6) d'embrayage ne soit relié au carter (4) de transmission, de préférence après que le carter (4) de transmission a été emmanché sur la transmission (3), la bague de serrage est montée axialement sur le stator (1) dans la zone de la deuxième extrémité de l'arbre de rotor (2), le stator (1) étant serré entre la plaque intermédiaire (11) et la bague de serrage, de préférence serré par des tirants (14).
